**Europäisches Patentamt**

**European Patent Office**

**Office européen des brevets**

(19)

(11) Veröffentlichungsnummer: **0 116 161**
**A1**

(12) # EUROPÄISCHE PATENTANMELDUNG

(21) Anmeldenummer: **83112872.3**

(22) Anmeldetag: **21.12.83**

(51) Int. Cl.³: **F 16 B 13/08**

(30) Priorität: **04.02.83 DE 3303721**
**19.02.83 DE 3305762**
**05.03.83 DE 3307944**

(43) Veröffentlichungstag der Anmeldung:
**22.08.84 Patentblatt 84/34**

(84) Benannte Vertragsstaaten:
**AT BE CH FR GB IT LI NL SE**

(71) Anmelder: **artur fischer forschung**
**Weinhalde 14 - 18**
**D-7244 Waldachtal 3 (Tumlingen)(DE)**

(72) Erfinder: **Fischer, h. c. Artur, Dr.**
**Weinhalde 34**
**D-7244 Waldachtal 3/Tumlingen(DE)**

(54) **Befestigungselement.**

(57) Die Erfindung betrifft ein Befestigungselement (1) aus zwei axial zusammenschiebbaren halbschalenförmigen Verankerungselementen (2a,2b), die an ihren zueinander gerichteten Gleitflächen (3) parallel laufend abgeschrägt und sich zu einem kreisförmigen Querschnitt ergänzend überlappt sind. Damit das Befestigungselement (1) bspw. in einer durch Rißbildung sich erweiternden Bohrung (5) nachspreizen kann, ist an dem einen Verankerungselement (2a) in Verlängerung seines kleinsten Querschnittes eine Lasche (7) mit einem Durchbruch (8) zum Einhängen von Drähten (9), Lochbändern oder dgl. angeordnet, die breiter ist als der Durchmesser der das Befestigungselement (1) aufnehmenden Bohrung (5).

FIG. 1

EP 0 116 161 A1

EP 1471

## Befestigungselement

Die Erfindung betrifft ein Befestigungselement bestehend aus zwei axial zusammenschiebbaren halbschalenförmigen Verankerungselementen, die an ihren zueinander gerichteten Gleitflächen parallel laufend abgeschrägt und sich zu einem kreisförmigen Querschnitt ergänzend überlappt sind.

Befestigungselemente der oben genannten Art weisen ein sehr hohes Spreizvermögen bei geringer Kerbwirkung im Bohrloch auf. Damit sind solche Befestigungselemente besonders für geringe Einbautiefen geeignet, die für Befestigungen in Decken erwünscht sind. Allerdings sind bei Anwendungen in der Decke Rißbildungen zu berücksichtigen, die zu einer Erweiterung der das Befestigungselement aufnehmenden Bohrung führen. Fehlt bei einem Befestigungselement für die Decke die Nachspreizmöglichkeit, um die Erweiterung des Bohrloches auszugleichen, kann dies zu einem Versagen der Verankerung führen.

Der Erfindung liegt daher die Aufgabe zugrunde, ein Befestigungselement zu schaffen, das bei einem sich durch Rißbildung erweiternden Bohrloch nachspreizt.

Erfindungsgemäß wird dies dadurch erreicht, daß an dem einen Verankerungselement in Verlängerung seines kleinsten Querschnittes eine Lasche mit einem Durchbruch zum Einhängen von Drähten, Lochbändern oder dgl. angeordnet ist, die breiter ist als der Durchmesser der das Befestigungselement aufnehmenden Bohrung.

Die Anordnung der Lasche in Verlängerung des kleinsten Querschnittes des einen Verankerungselementes bedeutet, daß die Belastung an dem Verankerungselement angreift, dessen größter Querschnitt sich in der Bohrlochtiefe befindet. Durch Einschlagen des anderen Verankerungselementes, dessen Abschrägung entgegengesetzt verläuft, wird das Befestigungselement im Bohrloch verkeilt. Öffnet sich nunmehr

...

das Bohrloch durch Bildung eines Risses, erfolgt durch die Gewichtsbelastung an der Lasche durch den abgehängten Gegenstand eine Axialverschiebung des mit der Lasche verbundenen Verankerungselementes
soweit, bis eine erneute Verkeilung im Bohrloch stattfindet. Mit zunehmendem Zug an der Lasche verstärkt sich auch der Spreizdruck, so
daß durch diesen Nachspreizeffekt auch bei sich erweiterndem Bohrloch hohe Haltekräfte erzielbar sind.

Beim Einsetzen des Befestigungselementes in das Bohrloch ist das zur
Verkeilung dienende Verankerungselement soweit zurückgeschoben, daß
der sich durch die Oberlappung ergebende Querschnitt der beiden Verankerungselemente kleiner ist als der Bohrungsdurchmesser. Als Begrenzung für die Einschubtiefe dient die Lasche, die breiter ist
als der Bohrlochdurchmesser.

In einer weiteren Ausgestaltung der Erfindung können die Verankerungselemente in Längsrichtung mit nacheinander angeordneten Aussparungen versehen sein. Durch diese Gestaltung wird die Steifigkeit
der halbschalenförmigen Verankerungselemente reduziert, so daß diese sich besser an die unregelmäßige Form des Bohrloches anpassen
können. Damit wird eine großflächige Anlage an der Bohrlochwandung
erzielt, die zu einer schonenden und gleichzeitig höhere Haltewerte
ermöglichenden Verankerung führt.

In einer weiteren Ergänzung der Erfindung können die beiden Verankerungselemente mit abscherbaren Verbindungsmitteln, wie Sicken, Ringe
oder dgl. in einer Stellung zusammengehalten sein, in der der sich
ergänzende Querschnitt der beiden Verankerungselemente kleiner ist
als der Bohrungsdurchmesser. Durch diese Maßnahme ergibt sich ein
kompaktes Element, das auch bei engen Bohrlöchern sehr einfach montierbar ist. Beim Einschlagen des einen Verankerungselementes werden die die beiden Verankerungselemente zusammenhaltenden Verbindungsmittel abgeschert, so daß die zur Verankerung notwendige axiale

...

0116161

Verschiebung der beiden Verankerungselemente erfolgen kann. Durch die als Anschlag dienende Lasche wird das eine Verankerungselement gehalten und dessen Zurückrutschen in das Bohrloch verhindert.

In einer weiteren Ausgestaltung der Erfindung kann das einzutreibende Verankerungselement mit radial abstehenden Flanschen versehen sein, die das mit der Befestigungslasche versehene Verankerungselement umfassen.

Durch die radial abstehenden Flansche des einen Verankerungselementes, die das andere Verankerungselement umfassen, werden beide Verankerungselemente in einer Stellung zusammengehalten, in der der Querschnitt der beiden Verankerungselemente im Oberlappungsbereich kleiner ist als der Bohrungsdurchmesser. Das Befestigungselement ist damit soweit in das Bohrloch einschiebbar, bis die Befestigungslasche an der Außenfläche des Mauerwerks zur Anlage kommt. Nunmehr wird durch Aufschlagen auf das andere Verankerungselement, das sowohl durch die Flansche als auch durch das Bohrloch geführt ist, die Verankerung des Befestigungselementes herbeigeführt.

In einer weiteren Ausgestaltung der Erfindung können die Flansche des einen Verankerungselementes auf der Befestigungslasche des anderen Verankerungselementes geführt sein und die Befestigungslasche an ihrer freien Stirnseite eine Verbreiterung aufweisen.

Das Umfassen des anderen Verankerungselementes erfolgt vorzugsweise im Bereich der Befestigungslasche, da diese außerhalb der Bohrung verbleibt und somit keine Behinderung beim Verankerungsvorgang eintritt. Durch die Verbreiterung der Befestigungslasche entsteht außerdem ein Anschlag, so daß auch bei etwas engerem Bohrloch durch Aufschlagen auf die Befestigungslasche das über die Flansche sich an der Verbreiterung abstützende andere Verankerungselement mit in das Bohrloch eingeschoben wird.

. . .

Schließlich kann in einer weiteren Ergänzung der Erfindung die Länge der Führung der Höhe des Flansches zuzüglich des Eintreibweges des zur Verankerung einzuschlagenden Verankerungselementes entsprechen. Durch diese Maßnahme ergibt sich ein vorbestimmbarer Mindesteintreibweg.

Schließlich kann in einer weiteren Ergänzung der Erfindung der Durchbruch versetzt zur Schwerpunktachse eine nasenförmige Erweiterung aufweisen, durch die ein am abgebogenen Ende des Drahtes angeordneter Vorsprung bei entsprechender, aus der Lotrichtung gedrehter Stellung des Drahtes durchschiebbar ist. Mit dieser Maßnahme kann eine Sicherung des eingehängten Drahtes im Durchbruch der Lasche erreicht werden.

Schließlich kann in einer weiteren Ergänzung der Erfindung die Befestigungslasche längsverlaufende Schlitze aufweisen, in die die Flansche eingreifen und den zwischen den Schlitzen verbleibenden Steg umfassen.

In einer weiteren Gestaltung der Erfindung kann das vordere Ende des einzutreibenden Verankerungselementes einen Fortsatz aufweisen, der in den halbschalenförmigen Hohlraum des anderen Verankerungselementes eingeschoben ist.

Durch den in den Hohlraum eingebogenen Fortsatz des einzutreibenden Verankerungselementes wird dieses in der Weise geführt, daß auch in zu groß gebohrtem Bohrloch ein Versatz der beiden Verankerungselemente nicht eintreten kann. Damit ist sichergestellt, daß die Gleitflächen der halbschalenförmigen Verankerungselemente aufeinander gleiten. Durch den eingebogenen Fortsatz ergibt sich außerdem eine gerundete Stirnfläche des einzutreibenden Verankerungselementes, so daß ein Verhaken an der Bohrlochwandung verhindert ist.

...

EP 1471

In einer weiteren Ausgestaltung der Erfindung kann das Profil des eingebogenen Fortsatzes dem Profil des Hohlraumes entsprechen. Mit dieser Gestaltung wird eine spielfreie Führung erreicht.

In weiterer Ergänzung der Erfindung kann das andere Verankerungselement mit in den Hohlraum ragenden Sicken versehen sein, die den Fortsatz des einzutreibenden Verankerungselementes gegen Zurückgleiten abstützen. Zum Einführen des Befestigungselementes sind die beiden Verankerungselemente so weit verschoben, daß der Querschnitt der sich überlappenden Verankerungselemente kleiner ist als der Bohrlochdurchmesser. In dieser Stellung wird das eine Verankerungselement durch Anlage des Fortsatzes an den Sicken abgestützt. Damit ist ein Zurückgleiten des einzutreibenden Verankerungselementes beim Einschieben des Befestigungselementes verhindert.

In weiterer Ausgestaltung der Erfindung kann im Bereich des hinteren Endes des einzutreibenden Verankerungselementes eine Zunge angeordnet sein, die in einen Durchbruch des anderen Verankerungselementes klemmend eingreift. Mit dieser Gestaltung werden die beiden Verankerungselemente zu einer kompakten Einheit zusammengehalten. Beim Einschlagen wird die Zunge abgeschert und damit die Verschiebung zur Aufspreizung des Befestigungselementes ermöglicht.

In der Zeichnung sind  . Ausführungsbeispiele der Erfindung dargestellt. Es zeigen:

Figur 1    das in das Bohrloch eingeschobene Befestigungselement

Figur 2    das Befestigungselement in verankertem Zustand

Figur 3    eine um 90 Grad gedrehte Ansicht des Befestigungselementes mit einem Federring als Verbindungsmittel der beiden Verankerungselemente

...

Figur 4  eine Variante des in das Bohrloch eingeschobenen Befestigungselementes

Figur 5  einen Schnitt durch die Befestigungslasche gemäß der Schnittlinie I-I

Figur 6  das um 90° zur Figur 4 gedrehte Befestigungselement in verankertem Zustand

Figur 7  eine Variante zur Verbindung der beiden Verankerungselemente

Figur 8  ein weiteres Befestigungselement

Figur 9  das um 90° zur Figur 8 gedrehte Befestigungselement.

Das Befestigungselement 1 besteht aus den beiden Verankerungselementen 2 a, 2 b, die an ihren zueinander gerichteten Gleitflächen 3
parallel laufend abgeschrägt sind. Die beiden Verankerungselemente
2 a, 2 b sind über eine Sickenverbindung 4 in einer Stellung zusammengehalten, in der der Querschnitt der sich überlappenden Verankerungselemente kleiner ist als der Durchmesser der Bohrung 5 im Mauerwerk 6. Damit ist das Befestigungselement 1 ohne Schwierigkeiten
in das Bohrloch 5 soweit einzusetzen, bis die an dem einen Verankerungselement 2 a angeordnete Lasche 7 an der Mauerwerksoberfläche
zur Anlage kommt. Die Lasche 7 ist in Verlängerung des kleinsten
Querschnittes des Verankerungselementes 2 a angeordnet, dessen
größter Querschnitt sich in der Bohrlochtiefe befindet.

Zur Verankerung des Befestigungselementes 1 wird das nicht mit der
Lasche 7 versehene Verankerungselement 2 b mit Hammerschlägen ggf.
unter Verwendung eines Hilfswerkzeuges in das Bohrloch 5 eingetrieben. Dabei wird zunächst die Sickenverbindung 4 abgeschert und damit die Gleitbewegung ermöglicht. Durch die schrägen Gleitflächen 3
werden die beiden Verankerungselemente 2 a, 2 b radial nach außen

...

0116161

EP 1471

gedrückt und im Bohrloch 5 verankert. Wird an den durch den Durchbruch 8 der Lasche 7 gezogenen Draht 9 ein Gegenstand, bspw. ein Rohr abgehängt, ergibt sich durch die Zugkraft an dem mit seinem größeren Querschnitt in der Bohrlochtiefe befindlichen Verankerungselement 2 a ein Nachspreizeffekt, der eine Erweiterung des Bohrloches 5, bspw. durch Rißbildung, ausgleichen kann.

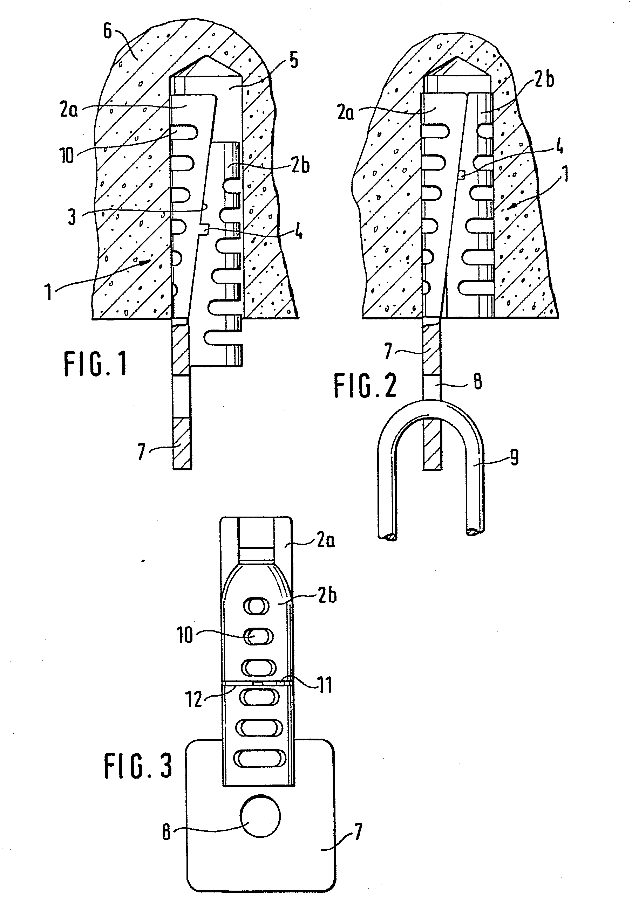

Um sowohl beim Eintreiben als auch bei der Verankerung ein gutes Anpassungsvermögen des Befestigungselementes 1 an die unregelmäßige Bohrlochwandung zu erreichen, weisen die relativ steifen halbschalenförmigen Verankerungselemente 2 a, 2 b in Längsrichtung nacheinander angeordnete Aussparungen 10 auf, die die Steifigkeit der Verankerungselemente reduzieren. In Figur 3 sind die beiden Verankerungselemente 2 a, 2 b mit einem Ring 11 verbunden, der in einer eingeprägten Kehlnut 12 der beiden Verankerungselemente 2 a, 2 b eingelegt ist und beim Verankern des Befestigungselementes abgeschert wird. Der als Bohrung ausgeführte Durchbruch 8 in der Lasche 7 kann zum Einhängen von Bändern auch als rechteckförmiger Durchbruch gestaltet sein. Die Breite der Lasche 7 ist so gewählt, daß eine ausreichende Anlage an der Mauerwerksoberfläche erreicht wird.

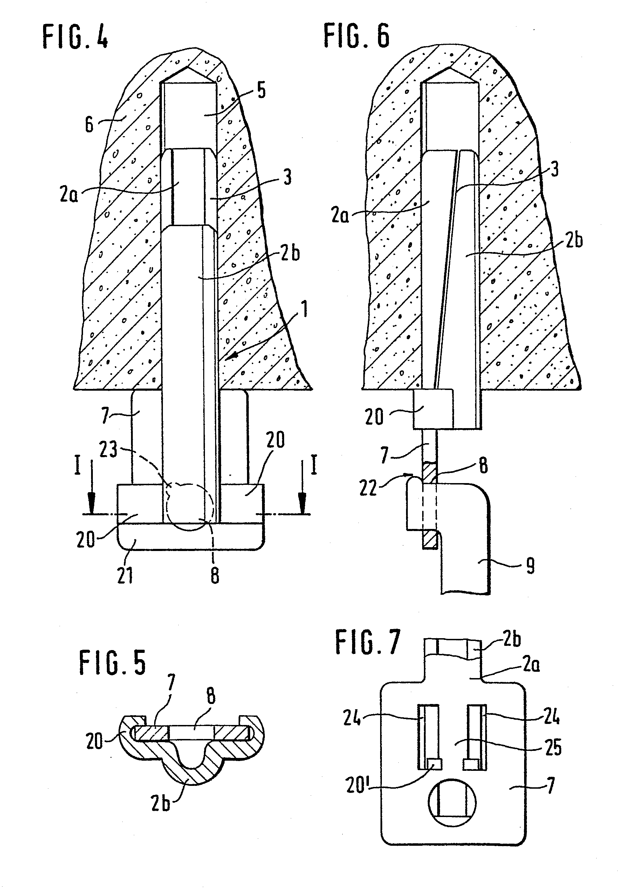

Das Befestigungselement 1 gemäß Figur 4 besteht ebenfalls aus den beiden Verankerungselementen 2a, 2b, die an ihren zueinander gerichteten Gleitflächen 3 parallellaufend abgeschrägt sind. Die beiden Verankerungselemente 2a, 2b, sind über die beiden radial abstehenden und die Befestigungslasche des einen Verankerungselementes umgreifenden Flansche 20 in einer Stellung zusammengehalten, in der der Querschnitt der sich überlappenden Verankerungselemente kleiner ist als der Durchmesser der Bohrung 5 im Mauerwerk 6. Beim Einschieben in das Bohrloch 5 können sich die Flansche 20 an der Verbreiterung 21 der Befestigungslasche 7 abstützen, so daß auch bei einem sehr engen Bohrloch durch leichte Schläge auf die Befestigungslasche 7 das Befestigungselement in seine Verankerungsstellung einschiebbar ist.

...

EP 1474 .                          - 11̶ - 8 -

Zur Sicherung des Drahtes 9 im Durchbruch 8 weist dieser eine an seinem abgebogenen Ende angeordneten Vorsprung 22 auf, der bei einer aus der Lotrichtung gedrehten Stellung des Drahtes 9 durch den Durchbruch 8 und der im Durchbruch angeordneten nasenartigen Erweiterung 23 durchgeschoben werden kann. Nach dem Drehen des Drahtes wieder in die Lotrichtung, hintergreift der Vorsprung 22 die Rückseite der Befestigungslasche 7, so daß eine Sicherung gegen Aushängen des Drahtes 9 erreicht ist.

Bei der Ausführungsform nach Figur 7 weist die Befestigungslasche 7 zwei parallelverlaufende Schlitze 24 auf, in die die an dem einen Verankerungselement 2b angeordneten Flansche 20' eingreifen. Diese Flansche 20' umfassen den zwischen den beiden Schlitzen 24 verbleibenden Steg 25.

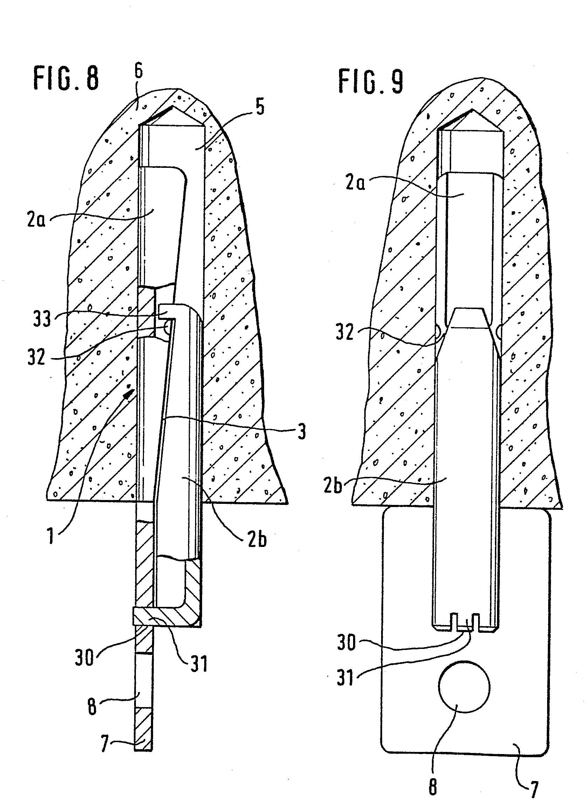

Bei dem Befestigungselement gemäß Figur 8 sind die beiden Verankerungselemente 2a, 2b, über die in den Durchbruch 30 des einen Verankerungselementes 2a klemmend eingepreßten Zunge 31 des anderen Verankerungselementes 2b in einer Stellung zusammengehalten, in der der Querschnitt der sich überlappenden Verankerungselemente kleiner ist als der Durchmesser der Bohrung 5 im Mauerwerk 6. Beim Einschieben in das Bohrloch 5 wird das Verankerungselement 2b durch die Zunge 31 einerseits und durch die in den Hohlraum ragenden Sicken 32 andererseits abgestützt, so daß auch bei einem sehr engen Bohrloch durch leichte Schläge auf die Befestigungslasche 7 das Befestigungselement in seiner Verankerungsstellung einschiebbar ist.

Bei der Verankerung des Befestigungselementes dient der an dem Verankerungselement 2b angeordnete und im halbschalenförmigen Hohlraum des anderen Verankerungselementes 2a eingebogene Fortsatz 33 als Führung, so daß selbst bei einem zu groß gebohrten Bohrloch die dünnwandigen Gleitflächen der beiden Verankerungselemente aufeinander g eiten.

...

artur fischer forschung

7244 Waldachtal 3 /Tumlingen

Tumlingen. 02. Februar 198¨

Ju/Sl

- 1 -

EP  1471

Zusammengefaßter Text für Auslandsanmeldung

P a t e n t a n s p r ü c h e

1. Befestigungselement aus zwei axial zusammenschiebbaren halbschalenförmigen Verankerungselementen, die an ihren zueinander gerichteten Gleitflächen parallel laufend abgeschrägt und sich zu einem kreisförmigen Querschnitt ergänzend überlappt sind, dadurch gekennzeichnet, daß an dem einen Verankerungselement in Verlängerung seines kleinsten Querschnittes eine Lasche mit einem Durchbruch zum Einhängen von Drähten, Lochbändern oder dgl. angeordnet ist, die breiter ist als der Durchmesser der das Befestigungselement aufnehmenden Bohrung.

Aktenzeichen: P 33 03 721.3
Priorität:    04. 02. 1984

2. Befestigungselement nach Anspruch 1, dadurch gekennzeichnet, daß die Verankerungselemente in Längsrichtung mit nacheinander angeordneten Aussparungen versehen sind.

Aktenzeichen P 33 03 721 .3
Priorität:    04. 02. 1984

3. Befestigungselement nach Anspruch 1, dadurch gekennzeichnet, daß die beiden Verankerungselemente mit abscherbaren Verbindungsmitteln, wie Sicken, Ringe oder dgl. in einer Stellung zusammengehalten sind, in der der sich ergänzende Querschnitt der beiden Verankerungselemente kleiner ist als der Bohrungsdurchmesser.

Aktenzeichen: P 33 03 721.3
Priorität:    04. 02. 1984

4. Befestigungselement nach Anspruch 1, dadurch gekennzeichnet, daß das einzutreibende Verankerungselement mit radial abstehenden Flanschen versehen ist, die das mit der Befestigungslasche versehene Verankerungselement umfassen.

Aktenzeichen: P 33 05 762.1
Priorität :   19. 02. 1984

5. Befestigungselement nach Anspruch 4, dadurch gekennzeichnet, daß die Flansche des einen Verankerungselementes auf der Befestigungslasche des anderen Verankerungselementes geführt sind, und daß die Befestigungslasche an ihrer freien Stirnseite eine Verbreiterung aufweist.

Aktenzeichen:P 33 05 762.1
Priorität:    19. 02. 1984

6. Befestigungselement nach Anspruch 4 und 5, dadurch gekennzeichnet, daß die Länge der Führung der Höhe des Flansches zuzüglich des Eintreibweges des zur Verankerung einzuschlagenden Verankerungselementes entspricht.

Aktenzeiche: P 33 05 762.1
Priorität:    19. 02. 1984

...

7. Befestigungselement nach Anspruch 1, dadurch gekennzeichnet, daß der Durchbruch versetzt zur Schwerpunktachse eine nasenförmige Erweiterung aufweist, durch die ein am abgebogenen Ende des Drahtes angeordneter Vorsprung bei entsprechender, aus der Lotrichtung gedrehter Stellung des Drahtes durchschiebbar ist.

Aktenzeichen: P 33 05 762.1

Priorität:  19. 02. 1984

8. Befestigungselement nach Anspruch 4, dadurch gekennzeichnet, daß die Befestigungslasche längsverlaufende Schlitze aufweist, in die die Flansche eingreifen und den zwischen den Schlitzen verbleibenden Steg umfassen.

Aktenzeichen: P 33 05 762.1

Priorität:  19. 02. 1984

9. Befestigungselement nach Anspruch 1, dadurch gekennzeichnet, daß das vorderer Ende des einzutreibenden Verankerungselementes einen Fortsatz aufweist, der in den halbschalenförmigen Hohlraum des anderen Verankerungselementes eingebogen ist.

Aktenzeichen : P 33 07 944.7

Priorität:  05. 03. 1984

10. Befestigungselement nach Anspruch 9, dadurch gekennzeichnet, daß das Profil des eingebogenen Fortsatzes dem Profil des Hohlraumes entspricht.

Aktenzeichen: P 33 07 944.7

Priorität :  05. 03. 1984

...

11. Befestigungselement nach Anspruch 9, dadurch gekennzeichnet, daß das andere Verankerungselement mit in den Hohlraum ragenden Sicken versehen ist, die den Fortsatz des einzutreibenden Verankerungselementes gegen Zurückgleiten abstützen.

Aktenzeichen: P 33 07 944.7
Priorität:     05. 03. 1984

12. Befestigungselement nach Anspruch 9, dadurch gekennzeichnet, daß im Bereich des hinteren Endes des einzutreibenden Verankerungselementes eine Zunge angeordnet ist, die in einen Durchbruch des anderen Verankerungselementes klemmend eingreift.

Aktenzeichen: P 33 07 944.7
Priorität:     05. 03. 1983

FIG.1

FIG.2

FIG.3

FIG. 4

FIG. 6

FIG. 5

FIG. 7

FIG.8

FIG.9

**Europäisches Patentamt**

## EUROPÄISCHER RECHERCHENBERICHT

| | EINSCHLÄGIGE DOKUMENTE | | EP 83112872.3 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
| A | EP - A2 - 0 040 300 (HILTI AKTIEN-GESELLSCHAFT) <br> * Zusammenfassung * <br> -- | 1,2,4, 5 | F 16 B 13/08 |
| P,A | DE - A1 - 3 220 483 (FISCHER, ARTUR, DR. H.C.) <br> * Patentanspruch 1; Fig. 1-3 * <br> -- | 1 | |
| A | DE - A1 - 2 548 150 (UPAT-MAX LANGENSIEPEN KG) <br> * Patentanspruch 1; Fig. 4 * <br> -- | 1 | |
| X | DE - A1 - 2 913 090 (HILTI AG) <br> * Patentanspruch 1; Fig. 1,6 * <br> -- | 1-4 | |
| X | DE - A1 - 2 829 158 (HILTI AG) <br> * Patentanspruch 1; Fig. 1,2,4, 5,7 * <br> ---- | 1-4 | RECHERCHIERTE SACHGEBIETE (Int. Cl. ³) <br><br> F 16 B |

Der vorliegende Recherchenbericht wurde für alle Patentansprüche erstellt.

| Recherchenort | Abschlußdatum der Recherche | Prüfer |
|---|---|---|
| WIEN | 05-04-1984 | REIF |